# EUROPÄISCHE PATENTSCHRIFT

(11) **EP 4 297 246 B1**
(45) Veröffentlichungstag und Bekanntmachung des Hinweises auf die Patenterteilung: **03.12.2025**
(21) Anmeldenummer: 23175564.6
(22) Anmeldetag: 26.05.2023
(51) Int. Cl.: H02K 3/38, H02K 11/25, H02K 3/52, G01K 1/14, G01K 1/16, H02K 15/12, G01K 1/18, G01K 13/08

(54) **STATOR FÜR EINEN ELEKTROMOTOR MIT ZUMINDEST EINER TASCHE ZUR AUFNAHME EINES TEMPERATURÜBERWACHUNGSELEMENTS**
STATOR FOR AN ELECTRIC MOTOR WITH AT LEAST ONE POCKET FOR HOLDING A TEMPERATURE MONITORING ELEMENT
STATOR POUR MOTEUR ÉLECTRIQUE COMPRENANT AU MOINS UNE POCHE POUR RECEVOIR UN ÉLÉMENT DE SURVEILLANCE DE TEMPÉRATURE

(30) Priorität: 24.06.2022 DE 102022115851
(43) Veröffentlichungstag der Anmeldung: 27.12.2023
(73) Patentinhaber: ebm-papst Mulfingen GmbH & Co. KG, 74673 Mulfingen (DE)
(72) Erfinder: LETTER, Tobias, 97980 Bad Mergentheim (DE); SCHMIDT, Madlene, 97999 Igersheim (DE)
(74) Vertreter: Staeger & Sperling Partnerschaftsgesellschaft mbB

(56) Entgegenhaltungen:
- WO-A1-2021/047711
- DE-A1- 102013 201 834
- US-A1- 2011 080 072
- US-A1- 2016 380 518
- US-A1- 2020 303 984
- US-B2- 11 223 258

## Beschreibung

Die Erfindung betrifft einen Stator für einen Elektromotor, wobei der Stator Taschen zur Aufnahme eines Temperaturüberwachungselements aufweist, sowie einen Elektromotor mit einem solchen Stator und ein Verfahren zur Herstellung eines solchen Stators.

Zur Realisierung eines thermischen Motorschutzes bei Statoren im Stand der Technik ist meist vorgesehen, dass an deren Wicklungen Temperaturüberwachungselemente, wie PTCs, Temperaturwächter oder andere Temperatursensoren, angeordnet sind.

Bei umpressten Statoren erfolgt diese thermische Überwachung meist dadurch, dass die Wicklungstemperatur über aus der Umpressung herausführende Dome abgegriffen wird. Hierbei ist jedoch problematisch, dass die Dome vergleichsweise langsam auf sich ändernde Temperaturen reagieren und die Temperaturerfassung entsprechend träge bzw. zeitverzögert ist.

Alternativ ist beispielsweise aus der EP 3 113 336 A1 bekannt, dass zwischen den Wicklungen Taschen angeordnet werden. Die Elemente, welche die Taschen bilden, liegen jedoch nicht zwingend unmittelbar an den Wicklungen an, sodass diese zumindest teilweise durch die Umpressung von den Wicklungen beabstandet sind. Daher kann es auch hier dazu kommen, dass die Wärme nur langsam auf die Taschen und einen gegebenenfalls darin anordenbaren Sensor übertragen wird. Folglich kann auch bei einer solchen Lösung nur träge bzw. zeitverzögert auf eine Temperaturänderung reagiert werden.

Um bei diesen Lösungen einen ausreichenden Motorschutz zu realisieren, muss der Motor daher schon bei vergleichsweise geringen Temperaturen abgeschaltet oder dessen Leistung reduziert werden, was den Betrieb entsprechend ineffizient macht.

Zur Lösung des Problems wären Taschen denkbar, die beim Umspritzen bzw. Umpressen der Wicklungen direkt durch an die Wicklungen geführte Kerne gebildet werden. Diese Kerne können die Wicklungen jedoch vergleichsweise leicht beschädigen, sodass es bei der Ausbildung der Taschen zu einer nicht akzeptablen Schädigung des Stators kommen kann.

Weitere Statoren für Elektromotoren bzw. Aspekte solcher Statoren sind zudem aus den Schriften US 2020/303984 A1, DE 10 2013 201834 A1 und US 11 223 258 B2 bekannt.

Der Erfindung liegt deshalb die Aufgabe zugrunde, die vorgenannten Nachteile zu überwinden und einen Stator bereitzustellen, an welchem die Temperatur der Wicklungen möglichst genau und mit schneller Reaktionszeit überwacht werden kann, wobei die Herstellung eines solchen Stators prozesssicher wiederholbar sein soll.

Diese Aufgabe wird durch die Merkmalskombination gemäß den unabhängigen Patentansprüchen gelöst.

Erfindungsgemäß wird daher ein Stator für einen Elektromotor vorgeschlagen, wie er durch die Merkmale des Hauptanspruchs bestimmt ist. Dieser weist um eine Rotationsachse angeordnete Statorzähne auf, welche jeweils mit einer Wicklung umwickelt sind. Weiter verfügt der Stator über zumindest ein wärmeleitfähiges Kontaktelement und vorzugsweise mehrere, insbesondere drei wärmeleitfähige Kontaktelemente, wobei sich das zumindest eine Kontaktelement von einem in Axialrichtung, d.h. entlang bzw. parallel der Rotationsachse, an die Wicklungen angrenzenden Bereich in Axialrichtung jeweils zwischen zwei Wicklungen erstreckt und zur unmittelbaren Anlage an zumindest eine der Wicklungen bezogen auf die Rotationsachse in Umfangsrichtung verformbar und/oder auslenkbar ausgebildet ist. Vorzugsweise ist ein solches Kontaktelement aus einem wärmeleitfähigen Material gebildet, wobei dieses insbesondere ein elektrisch nicht leitendes bzw. elektrisch isolierendes Material, wie Kunststoff, ist. Weiter sind die Wicklungen mit einem elektrisch nichtleitenden Material, wie beispielsweise Kunststoff, umspritzt oder umpresst. Dieses elektrisch nichtleitende Material bildet eine Kapselung der Wicklungen, welche auch als Umpressung bzw. Umspritzung der Wicklungen bzw. des Stators bezeichnet werden kann. Das Material bildet gemeinsam mit dem zumindest einem Kontaktelement jeweils eine Tasche zur Aufnahme eines in Axialrichtung in die Tasche einsteckbaren Temperaturüberwachungselements. Die Tasche ist entsprechend in der Kapselung ausgebildet und weist vorzugsweise ein in Axialrichtung offenes Ende auf. Ein solches Temperaturüberwachungselement kann insbesondere von dem in Axialrichtung an die Wicklungen angrenzenden Bereich, von welchem sich aus das Kontaktelement zwischen die Wicklungen erstreckt, in die jeweilige Tasche einsteckbar sein. Gemäß der Erfindung ist vorgesehen, dass eine wicklungsseitige Wandung der Tasche zumindest in einem Abschnitt durch das unmittelbar an der Wicklung anliegende Kontaktelement gebildet ist, wobei das Temperaturüberwachungselement vorzugsweise an diesem Abschnitt anordenbar ist, sodass das Temperaturüberwachungselement unmittelbar an dem Abschnitt des Kontaktelements anliegt, welches unmittelbar an der Wicklung anliegt.

Vorzugsweise ist das Kontaktelement dabei ausgebildet, während der Herstellung des Stators und insbesondere während des Umspritzens bzw. Umpressens der Wicklungen zur Herstellung der Kapselung gegen die zumindest eine Wicklung gepresst zu werden.

Zum möglichst schnellen und exakten Temperaturabgriff sollen die Temperaturüberwachungselemente, vorzugsweise Temperatursensoren, trotz Umpressung bzw. Umspritzung der Wicklungen möglichst nahe an die Wicklung gebracht werden. Durch eine exaktere und reaktionsschnellere Temperaturüberwachung kann der Motor exakt gesteuert und bestmöglich thermisch ausgenutzt werden. Die grundlegende erfinderische Idee ist es daher Taschen in der Umpressung bzw. Umspritzung zu bilden, welche unmittelbar an jeweils zumindest eine Wicklung angrenzt bzw. an dieser anliegt.

In diesen Taschen können dann die Temperaturüberwachungselemente unmittelbar an die Wicklungen angrenzend bzw. nur durch das wärmeleitfähige Kontaktelement zu diesen beabstandet angeordnet und die Temperatur der Wicklungen reaktionsschnell und exakt erfasst werden.

Um eine Beschädigung der Wicklungen beim Einführen der Kontaktelemente zwischen die Wicklungen zu vermeiden, sind die Kontaktelemente in Umfangsrichtung um die Rotationsachse bestimmungsgemäß verformbar ausgebildet. Dadurch sind die Kontaktelemente vorzugsweise in einem unverformten Zustand zwischen den jeweils zwei Wicklungen anordenbar, und anschließend in einen verformten Zustand bringbar, in welchem sie unmittelbar an zumindest einer der Wicklungen anliegen. Entsprechend liegt das Werkzeug oder ein Kern, welches das zumindest eine Kontaktelement verformt nicht unmittelbar an den Wicklungen an und kann diese nicht beschädigen. Dadurch, dass das zumindest eine Kontaktelement beim Einführen auch selbst nicht an den Wicklungen "schabt", sondern vorzugsweise nach dem Einschieben zwischen die Wicklungen orthogonal zu der Axialrichtung gegen diese gedrückt wird, kommt es auch durch das zumindest eine Kontaktelement nicht zu einer Beschädigung der Wicklungen.

Im Rahmen der Erfindung kann bezüglicher der Kontaktelemente als anliegend an die Wicklungen verstanden werden, dass der Abstand zwischen dem jeweiligen Kontaktelement und der zumindest einen zugehörigen Wicklung minimiert und beispielsweise kleiner 0,5 mm ist.

Weiter ist zu berücksichtigen, dass die Wicklungen vollständig von einer die Wärmeleitung nicht oder nur geringfügig beeinflussenden Isolationsschicht umgeben sein können.

Eine besonders vorteilhafte Variante des Stators sieht dabei vor, dass das zumindest eine Kontaktelement jeweils zwei sich in Axialrichtung zwischen die zwei Wicklungen erstreckende Zungen aufweist. Dabei ist eine erste Zunge zur unmittelbaren Anlage an eine erste der zwei Wicklungen in eine erste Umfangsrichtung und eine zweite Zunge zur unmittelbaren Anlage an eine zweite der zwei Wicklungen in eine entgegengesetzte zweite Umfangsrichtung verformbar und/oder auslenkbar ausgebildet. Die Wandung der mit dem Kontaktelement gebildeten Tasche ist entsprechend in einem ersten Abschnitt durch die unmittelbar an der ersten Wicklung anliegende erste Zunge und in einem zweiten, vorzugsweise in Umfangsrichtung in der Tasche gegenüberliegenden Abschnitt durch die unmittelbar an der zweiten Wicklung anliegende zweiten Zunge gebildet. Die Tasche wird hierbei zwischen den zwei Zungen gebildet, sodass ein in der Tasche anordenbares Temperaturüberwachungselement zugleich an beiden Abschnitten bzw. beiden Zungen anliegen und beide Wicklungen überwachen kann. Alternativ können in der Tasche auch zwei Temperaturüberwachungselemente anordenbar sein, von welchen jeweils eins je einer Wicklung zugeordnet ist.

Weiter vorzugsweise umgreifen die zwei Zungen die Tasche in Umfangsrichtung und sind durch einen in Radialrichtung verlaufenden Schlitz getrennt, wodurch sie getrennt voneinander verformbar sind.

Das elektrisch nichtleitende Material bzw. die Umpressung des Stators kann sich zudem zwischen die zwei Zungen und insbesondere durch den Schlitz d.h. in einen Bereich zwischen die Zungen erstrecken und eine Wandung der Tasche zumindest abschnittsweise zwischen den Zungen ausbilden.

Dadurch, dass das Material bzw. die Umpressung sich zwischen die Zungen erstreckt oder zumindest eine einzelne Zunge umgreift, kann das verformte Kontaktelement auch nach einem Entfernen des das Kontaktelemente verformenden Werkzeug oder Kerns in seinem verformten Zustand und mithin an der zumindest einen Wicklung anliegend gehalten werden.

Entsprechend kann das Kontaktelement bzw. dessen Zungen plastisch oder elastisch verformbar sein.

Die Zungen laufen zudem ausgehend von dem in Axialrichtung an die Wicklungen angrenzenden Bereich vorzugsweise aufeinander zu und bilden dadurch einen Keil, welcher entsprechend einfacher zwischen die Wicklungen eingeschoben werden kann.

Um zu vermeiden, dass es beim Anordnen und insbesondere bei einem Einschieben des zumindest einen Kontaktelements in Axialrichtung zwischen die Wicklungen zu einer Beschädigung der Wicklungen kommt, ist erfindungsgemäß vorgesehen, dass das Kontaktelement in einem unverformten Zustand, bezogen auf die Rotationsachse in Umfangsrichtung eine geringere Erstreckung aufweist, als ein Abstand der zwei Wicklungen in Umfangsrichtung voneinander.

Dabei ist insbesondere vorgesehen, dass das Kontaktelement in Axialrichtung einen ersten Abschnitt aufweist, welcher nicht zwischen den Wicklungen angeordnet ist, und einen in Axialrichtung unmittelbar angrenzenden zweiten Abschnitt, welcher zwischen den Wicklungen angeordnet bzw. anordenbar ist. Da der erste Abschnitt nicht zwischen den Wicklungen angeordnet wird, kann dieser die Wicklungen auch nicht beschädigen, sodass insbesondere nur die Erstreckung des zweiten Abschnitts in Umfangsrichtung geringer ist, also der Abstand zwischen den zwei Wicklungen.

Da sich die Statorzähne mit den Wicklungen in Radialrichtung bezüglich der Rotationsachse erstrecken, wird der Abstand zwischen je zwei unmittelbar benachbarten Wicklungen nach radialaußen größer. Entsprechend ist das zumindest eine Kontaktelement in Radialrichtung vorzugsweise an einer vorbestimmten Position bzw. einem vorbestimmten Abschnitt zwischen den zwei Wicklungen anordenbar, sodass zudem gilt, dass die maximale Erstreckung des Kontaktelements bzw. des zweiten Abschnitts des Kontaktelements in Umfangsrichtung kleiner ist, als der minimale Abstand zwischen den zwei Wicklungen in dem Abschnitt der Wicklungen in welchem das Kontaktelement angeordnet werden soll.

Weiter weist der Stator vorzugsweise eine Schaltscheibe auf, welche in dem in Axialrichtung an die Wicklungen angrenzenden Bereich angeordnet ist. Das zumindest eine Kontaktelement ist mit seiner jeweiligen sich von dem Bereich zwischen die zwei Wicklungen erstreckenden Seite an der Schaltscheibe fixiert und insbesondere integral mit der Schaltscheibe ausgebildet.

Die Schaltscheibe kann dabei gemeinsam mit den Wicklungen mit dem elektrisch nichtleitenden Material umspritzt oder umpresst bzw. eingekapselt sein.

Eine Weiterbildung der Erfindung umfasst zudem zumindest ein Temperaturüberwachungselement. Dabei ist vorgesehen, dass in der zumindest einen Tasche jeweils zumindest ein Temperaturüberwachungselements angeordnet ist, wobei dieses derart in der Tasche angeordnet sein kann, dass das Temperaturüberwachungselement der jeweiligen Wicklung gegenüberliegend unmittelbar an dem die Wandung der Tasche bildenden Abschnitt des Kontaktelements bzw. der ersten und/oder zweiten Zunge anliegt.

Bei dem Temperaturüberwachungselement kann es sich insbesondere um ein PTC, einen Temperaturwächter oder einen anderen Temperatursensor handeln.

Weiter betrifft ein Aspekt der Erfindung einen Elektromotor mit einem erfindungsgemäßen Stator.

Hinzukommt, dass die Erfindung ein Verfahren zur Herstellung eines Stators gemäß den Merkmalen des nebengeordneten Verfahrensanspruchs betrifft. Verfahrensgemäß ist dabei vorgesehen, dass das zumindest eine Kontaktelement zu den Wicklungen berührungsfrei vorzugsweise in Axialrichtung zwischen je zwei Wicklungen geschoben wird, sodass sich das Kontaktelement von dem in Axialrichtung an die Wicklungen angrenzenden Bereich zwischen die Wicklungen erstreckt ohne die Wicklungen zu berühren. Anschließend wird ein Kern von dem in Axialrichtung angrenzenden Bereich in Axialrichtung in und/oder gegen das Kontaktelement geschoben, wobei dabei das Kontaktelement von dem Kern in Umfangsrichtung verformt und/oder ausgelenkt sowie unmittelbar gegen zumindest eine Wicklung gepresst wird, sodass also das Kontaktelement mit einem Abschnitt unmittelbar an der Wicklung anliegt.

Bei dem Kern kann es sich um einen verlorenen aber auch um einen wiederverwendbaren Kern, insbesondere in Form eines Schiebers handeln.

Bei einer Variante, bei welcher das Kontaktelement zwei Zungen aufweist, werden diese durch den Kern in Umfangsrichtung auseinandergespreizt, bis die erste Zunge an der ersten Wicklung und die zweite Zunge an der zweiten Wicklung anliegt.

Anschließend können die Wicklungen, das zumindest eine Kontaktelement und der Kern mit dem elektrisch nichtleitenden Material umspritzt oder umpresst und dadurch die Kapselung des Stators gebildet werden. Ist das zumindest eine Kontaktelement an einer Schaltscheibe fixiert oder integral mit dieser ausgebildet, kann auch die Schaltscheibe unmittelbar mit dem Material umspritzt bzw. umpresst werden. Dadurch wird je Kontaktelement die jeweilige Tasche gebildet, welche jedoch bei der Herstellung noch mit dem Kern gefüllt ist. Anschließend bzw. nach einem formfesten Erstarren der Umpressung kann der Kern entfernt werden.

Entsprechend ist vorzugsweise vorgesehen, dass der Kern als ein Negativ der Tasche ausgebildet ist. Weiter kann auch der Kern ein in Axialrichtung zulaufendes Ende aufweisen, mit welchem er in Axialrichtung in das zumindest eine Kontaktelement bzw. gegen das zumindest eine Kontaktelement geführt werden kann.

Sind mehrere Kontaktelemente und entsprechend mehrere Kerne vorgesehen, können die Kerne einteilig und/oder einstückig miteinander ausgebildet sein.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: einen perspektivisch dargestellten Stator im Längsschnitt;
- Fig. 2: eine Seitenansicht des Stators im Teilschnitt;
- Fig. 3: eine Schaltscheibe mit integral ausgebildeten Kontaktelementen;
- Fig. 4: einen perspektivisch dargestellten Stator im Querschnitt;
- Fig.5: eine Detailansicht eines Schnittes durch einen umpressten Stator.

Die Figuren sind beispielhaft schematisch. Gleiche Bezugszeichen in den Figuren weisen auf gleiche funktionale und/oder strukturelle Merkmale hin.

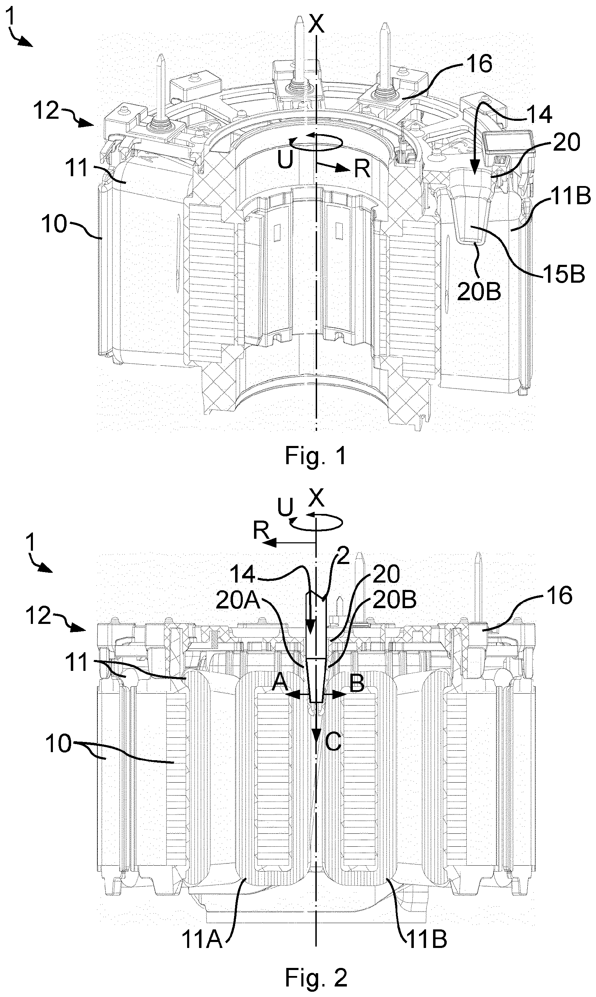

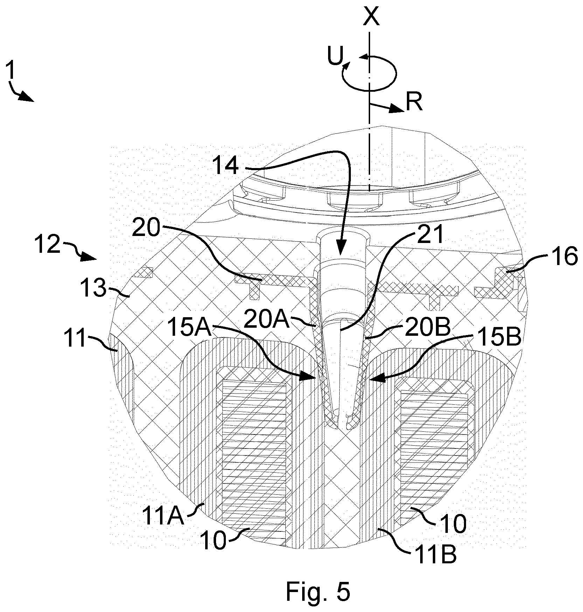

Weiter bilden die Figuren 1 bis 5 vorzugsweise verschiedene Ansichten und Komponenten eines Stators 1 ab, sodass die entsprechenden Merkmale und Beschreibung analog übertragbar sind.

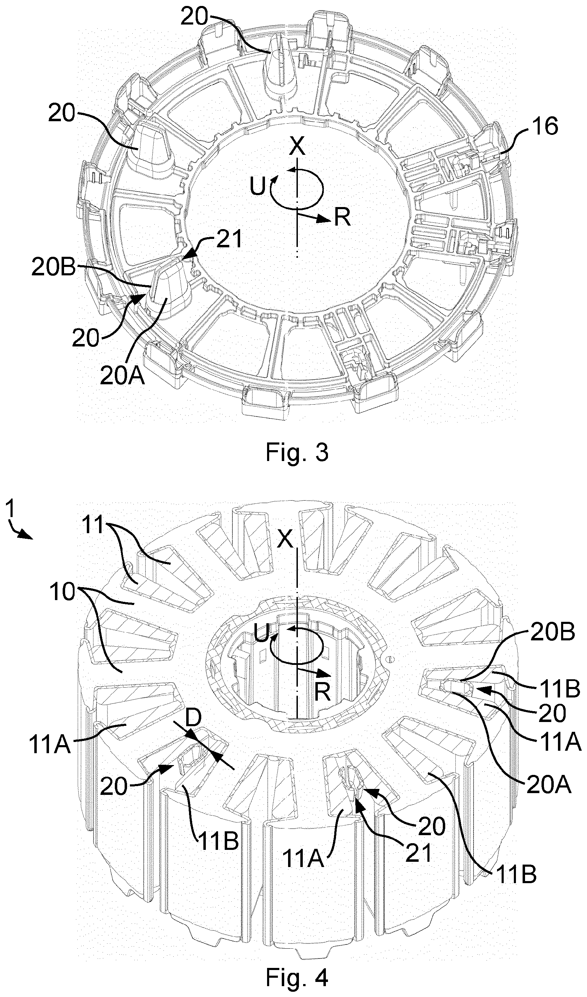

Bei dem in Figur 1 dargestellten Längsschnitt durch den Stators 1, ist insbesondere dargestellt, das in dem Bereich 12, welcher in Axialrichtung d.h. entlang der Rotationsachse X unmittelbar an die mit den Wicklungen 11 umwickelten Statorzähne 10 angrenzt, eine Schaltscheibe 16 angeordnet ist, welche integral drei Kontaktelemente 20 ausbildet, wie sie in Figur 3 zu sehen sind. Dabei weist jedes der drei Kontaktelemente 20 zwei Zungen 20A, 20B auf, welche voneinander durch einen in Radialrichtung R das Kontaktelement 20 durchlaufenden Schlitz 21 getrennt sind, sodass die zwei Zungen 20A, 20B getrennt voneinander in Umfangsrichtung auslenkbar sind. Vorliegend sind die zwei Zungen 20A, 20B jeweils halbschalenförmig ausgebildet, sodass sie die Tasche 14 in Umfangsrichtung U abschnittsweise umgreifen.

Die Zungen 20A, 20B bzw. die Kontaktelemente 20 erstrecken sich von dem in Axialrichtung an die Wicklungen 11 angrenzenden Bereich 12 jeweils in Axialrichtung zwischen zwei Wicklungen 11A, 11B, sodass also eine erste Zunge 20A einer ersten Wicklung 11A und eine zweite Zunge 20B einer zweiten Wicklung 11B zugeordnet ist.

Dabei ist besonders vorteilhaft, dass alle Kontaktelemente 20, dadurch, dass sie integral mit der Schaltscheibe 16 ausgebildet und entsprechend miteinander verbunden sind, gleichzeitig durch eine Verschiebung in Axialrichtung zwischen den Wicklungen 11 angeordnet werden können.

Um eine Beschädigung der Wicklungen 11 zu vermeiden, weist der Abschnitt der Kontaktelemente 20, welcher sich zwischen die Wicklungen 11 erstreckt, in Umfangsrichtung U eine geringere Erstreckung auf, als der minimale Abstand D der Wicklungen 11A, 11B zueinander, in dem Radialbereich, in welchem das Kontaktelement 20 angeordnet werden soll, was insbesondere in Figur 4 dargestellt ist.

Wurden die Kontaktelemente 20 in ihrem unverformten Zustand zwischen den Wicklungen 11 angeordnet, sodass sich also die jeweils zwei Zungen 20A, 20B zwischen je zwei benachbarte Wicklungen 11A, 11B erstrecken, wird ein in Figur 2 schematisch dargestellter Kern 2 in Axialrichtung in jede der Kontaktelemente 20 eingeführt, sodass die erste Zunge 20A von der axialen Bewegung C des Kerns 2 entlang der Umfangsrichtung U und insbesondere orthogonal zu der Axialrichtung in eine erste Richtung A und die zweite Zunge 20B in eine entgegengesetzte zweite Richtung B gepresst bzw. aufgespreizt werden, bis die erste Zunge 20A an der ersten Wicklung 11A und die zweite Zunge 20B an der zweiten Wicklung 11B anliegt.

Durch das Pressen bzw. Aufspreizen werden die Kontaktelemente 20 bzw. deren Zungen 20A, 20B ausgelenkt und entsprechend in einen verformten Zustand gebracht, wobei diese dabei auch plastisch oder federelastisch verformt werden können.

Da der Kern 2 nicht unmittelbar an den Wicklungen 11, 11A, 11B anliegt und sich bei seiner Bewegung C auch nicht entlang der Wicklungen 11, 11A, 11B bewegt bzw. entlang der Wicklungen 11, 11A, 11B schabt, können die Wicklungen 11, 11A, 11B nicht durch den Kern 2 beschädigt werden.

Die Kontaktelemente 20 bzw. deren Zungen 20A, 20B werden nun von den Kernen 2 in dem verformten Zustand gehalten und die Wicklungen 11, 11A, 11B zusammen mit der Schaltscheibe 16 mit einem elektrisch nichtleitfähigem Material umspritzt bzw. umpresst, wodurch die Kapselung 13 gebildet wird.

Da der Zwischenraum zwischen den Zungen 20A, 20B jeweils zumindest teilweise mit dem Kern 2 gefüllt ist, kann das elektrisch nichtleitfähige Material in den Schlitz 21 und zum Teil zwischen die Zungen 20A, 20B eindringen, wobei der von dem Kern 2 gefüllte Bereich frei bleibt. Wird der Kern 2 bzw. werden die Kerne 2 nach dem formfesten Erstarren des Materials aus dem Stator 1 entfernt, verbleibt zwischen den jeweils zwei Zungen 20A, 20B die Tasche 14.

Jeweils zumindest ein Abschnitt 15A, 15B der Wandung der Tasche 14 wird dabei von der jeweiligen Zunge 20A, 20B gebildet, sodass dieser Abschnitt 15A, 15B nach außen unmittelbar an die jeweilige Wicklung 11A, 11B angrenzt und nach innen frei von dem die Kapselung 13 bildenden Material ist.

In der Tasche 14 kann ein nicht dargestelltes Temperaturüberwachungselement angeordnet werden, welches unmittelbar an zumindest einem der Abschnitte 15A, 15B aufliegen und somit über das Kontaktelement 20 mit der jeweiligen Wicklung 11A, 11 die Temperatur der jeweiligen Wicklung 11A, 11B erfassend in Kontakt sein kann. Entsprechend können die Temperaturüberwachungselemente die Temperatur bzw. die Temperaturen der Wicklungen 11A, 11B reaktionsschnell erfasst und ein Elektromotor mit einem solchen Stator 1 exakt gesteuert werden.

## Patentansprüche

1. Stator (1) für einen Elektromotor,
wobei der Stator (1) um eine Rotationsachse (X) angeordnete Statorzähne (10), welche jeweils mit einer Wicklung (11, 11A, 11B) umwickelt sind, und zumindest ein wärmeleitfähiges Kontaktelement (20) aufweist,
wobei sich das zumindest eine Kontaktelement (20) von einem in Axialrichtung an die Wicklungen (11, 11A, 11B) angrenzenden Bereich (12) in Axialrichtung jeweils zwischen zwei Wicklungen (11, 11A, 11B) erstreckt und zur unmittelbaren Anlage an zumindest eine der Wicklungen (11, 11A, 11B) in Umfangsrichtung (U) verformbar und/oder auslenkbar ausgebildet ist,
**dadurch gekennzeichnet, dass**
die Wicklungen (11, 11A, 11B) mit einem eine Kapselung (13) bildenden elektrisch nichtleitenden Material umspritzt oder umpresst sind, welches mit dem zumindest einem Kontaktelement (20) jeweils eine Tasche (14) zur Aufnahme eines in Axialrichtung einsteckbaren Temperaturüberwachungselements bildet, deren wicklungsseitige Wandung (15A, 15B) zumindest in einem Abschnitt durch das unmittelbar an der Wicklung (11, 11A, 11B) anliegende Kontaktelement (20) gebildet ist,
und dass das Kontaktelement (20) in einem unverformten Zustand in Umfangsrichtung (U) um die Rotationsachse (X) eine geringere Erstreckung aufweist, als ein Abstand (D) in Umfangsrichtung der zwei Wicklungen (11A, 11B) voneinander.

2. Stator nach Anspruch 1,
wobei das zumindest eine Kontaktelement (20) jeweils zwei sich in Axialrichtung zwischen die zwei Wicklungen (11, 11A, 11B) erstreckende Zungen (20A, 20B) aufweist,
von welchen eine erste Zunge (20A) zur unmittelbaren Anlage an eine erste der zwei Wicklungen (11A) in eine erste Umfangsrichtung und eine zweite Zunge (20B) zur unmittelbaren Anlage an eine zweite der zwei Wicklungen (11B) in eine entgegengesetzte zweite Umfangsrichtung verformbar und/oder auslenkbar ausgebildet ist,
und die Wandung (15A, 15B) der mit dem Kontaktelement gebildeten Tasche (14) in einem ersten Abschnitt durch die unmittelbar an der ersten Wicklung (11A) anliegende erste Zunge (20A) und in einem zweiten Abschnitt durch die unmittelbar an der zweiten Wicklung (11B) anliegende zweiten Zunge (20B) gebildet ist.

3. Stator nach Anspruch 2,
wobei die zwei Zungen (20A, 20B) die Tasche (14) in Umfangsrichtung umgreifen und durch einen in Radialrichtung (R) verlaufenden Schlitz (21) getrennt sind.

4. Stator nach einem der Ansprüche 2 oder 3,
wobei sich das elektrisch nichtleitende Material zwischen die zwei Zungen (20A, 20B) erstreckt.

5. Stator nach einem der Ansprüche 2 oder 3,
wobei sich das elektrisch nichtleitende Material zwischen die zwei Zungen (20A, 20B) und durch den Schlitz (21) erstreckt.

6. Stator nach einem der Ansprüche 2 bis 5,
wobei die Zungen (20A, 20B) ausgehend von dem in Axialrichtung an die Wicklungen (11, 11A, 11B) angrenzenden Bereich (12) aufeinander zulaufen.

7. Stator nach einem der vorhergehenden Ansprüche,
ferner aufweisend eine Schaltscheibe (16), welche in dem in Axialrichtung an die Wicklungen (11, 11A, 11B) angrenzenden Bereich (12) angeordnet ist,
wobei das zumindest eine Kontaktelement (20) mit seiner jeweiligen sich von dem Bereich (12) zwischen die zwei Wicklungen (11A, 11B) erstreckenden Seite an der Schaltscheibe (16) fixiert ist.

8. Stator nach dem vorhergehenden Anspruch,
wobei das zumindest eine Kontaktelement (20) mit seiner jeweiligen sich von dem Bereich (12) zwischen die zwei Wicklungen (11A, 11B) erstreckenden Seite integral mit der Schaltscheibe (16) ausgebildet ist.

9. Stator nach dem vorhergehenden Anspruch,
wobei die Schaltscheibe (16) gemeinsam mit den Wicklungen (11, 11A, 11B) mit dem elektrisch nichtleitenden Material umspritzt oder umpresst ist.

10. Stator nach einem der vorhergehenden Ansprüche,
wobei in der jeweiligen Tasche (14) jeweils zumindest ein Temperaturüberwachungselement derart angeordnet ist, dass dieses der jeweiligen Wicklung (11A, 11B) gegenüberliegend unmittelbar an dem die Wandung der Tasche (14) bildenden Abschnitt des Kontaktelements (20) anliegt.

11. Elektromotor mit einem Stator (1) gemäß einem der vorhergehenden Ansprüche.

12. Verfahren zur Herstellung eines Stators (1),
wobei der Stator (1) um eine Rotationsachse (X) angeordnete Statorzähne (10), welche jeweils mit einer Wicklung (11, 11A, 11B) umwickelt sind, und zumindest ein wärmeleitfähiges Kontaktelement (20) aufweist,
wobei sich das zumindest eine Kontaktelement (20) von einem in Axialrichtung an die Wicklungen (11, 11A, 11B) angrenzenden Bereich (12) in Axialrichtung jeweils zwischen zwei Wicklungen (11, 11A, 11B) erstreckt und zur unmittelbaren Anlage an zumindest eine der Wicklungen (11, 11A, 11B) in Umfangsrichtung (U) verformbar und/oder auslenkbar ausgebildet ist,
**dadurch gekennzeichnet, dass**
die Wicklungen (11, 11A, 11B) mit einem eine Kapselung (13) bildenden elektrisch nichtleitenden Material umspritzt oder umpresst sind, welches mit dem zumindest einem Kontaktelement (20) jeweils eine Tasche (14) zur Aufnahme eines in Axialrichtung einsteckbaren Temperaturüberwachungselements bildet, deren wicklungsseitige Wandung (15A, 15B) zumindest in einem Abschnitt durch das unmittelbar an der Wicklung (11, 11A, 11B) anliegende Kontaktelement (20) gebildet ist,
und, dass das zumindest eine Kontaktelement (20) berührungsfrei zu den Wicklungen (11, 11A, 11B) zwischen je zwei Wicklungen (11A, 11B) geschoben wird, sodass sich das Kontaktelement (20) von dem in Axialrichtung an die Wicklungen (11, 11A, 11B) angrenzenden Bereich (12) zwischen die Wicklungen (11, 11A, 11B) erstreckt ohne diese zu berühren,
wobei ein Kern (2) von dem in Axialrichtung angrenzenden Bereich (12) in Axialrichtung in und/oder gegen das Kontaktelement (20) geschoben, das Kontaktelement (20) von dem Kern (2) in Umfangsrichtung (U) verformt und/oder ausgelenkt sowie unmittelbar gegen zumindest eine Wicklung (11, 11A, 11B) gepresst wird.

13. Verfahren nach dem vorhergehenden Anspruch,
wobei die Wicklungen (11, 11A, 11B), das zumindest eine Kontaktelement (20) und der Kern (2) zur Bildung der Kapselung (13) mit dem elektrisch nichtleitenden Material umspritzt oder umpresst werden und je Kontaktelement (20) die jeweilige Tasche (14) gebildet wird.

14. Verfahren nach einem der beiden vorhergehenden Ansprüche,
wobei der Kern (2) als ein Negativ der Tasche (14) ausgebildet ist.

## Claims

1. A stator (1) for an electric motor,
wherein the stator (1) has stator teeth (10) arranged about an axis of rotation (X), each of which is wound with a winding (11, 11A, 11B), and at least one thermally conductive contact element (20),
wherein the at least one contact element (20) extends from a region (12) adjoining the windings (11, 11A, 11B) in the axial direction in each case between two windings (11, 11A, 11B) and is formed to be deformable and/or deflectable in the circumferential direction (U) for direct contact with at least one of the windings (11, 11A, 11B),
**characterized in that** the windings (11, 11A, 11B) are overmolded or remolded with an electrically non-conductive material forming an encapsulation (13), which material forms with the at least one contact element (20) in each case a pocket (14) for receiving a temperature monitoring element which can be inserted in the axial direction, the winding-side wall (15A, 15B) of which is formed at least in a section by the contact element (20) directly abutting the winding (11, 11A, 11B) and **in that** the contact element (20) has a smaller extension in an undeformed state in the circumferential direction (U) about the axis of rotation (X) than a distance (D) in the circumferential direction of the two windings (11A, 11B) from one another.

2. The stator according to claim 1,
wherein the at least one contact element (20) has in each case two tongues (20A, 20B) extending in the axial direction between the two windings (11, 11A, 11B),
of which a first tongue (20A) for direct contact with a first of the two windings (11A) in a first circumferential direction and a second tongue (20B) for direct contact with a second of the two windings (11B) in an opposite second circumferential direction is formed to be deformable and/or deflectable,
and the wall (15A, 15B) of the pocket (14) formed with the contact element is formed in a first section by the first tongue (20A) directly abutting the first winding (11A) and in a second section by the second tongue (20B) directly abutting the second winding (11B).

3. The stator according to claim 2,
wherein the two tongues (20A, 20B) surround the pocket (14) in the circumferential direction and are separated by a slot (21) extending in the radial direction (R).

4. The stator according to any one of claims 2 or 3,
wherein the electrically non-conductive material extends between the two tongues (20A, 20B) and in particular through the slot (21).

5. The stator according to any one of claims 2 or 3,
wherein the electrically non-conductive material extends between the two tongues (20A, 20B) and through the slot (21).

6. The stator according to any one of claims 2 to 4,
wherein the tongues (20A, 20B) run toward one another starting from the region (12) adjoining the windings (11, 11A, 11B) in the axial direction.

7. The stator according to any one of the preceding claims,
further having a switching disk (16) which is arranged in the region (12) adjoining the windings (11, 11A, 11B) in the axial direction,
wherein the at least one contact element (20) is fixed to the switching disk (16) by its respective side extending from the region (12) between the two windings (11A, 11B).

8. The stator according to the preceding claim,
wherein the at least one contact element (20) is formed integrally with the switching disk (16) by its respective side extending from the region (12) between the two windings (11A, 11B).

9. The stator according to the preceding claim,
wherein the switching disk (16) is overmolded or remolded together with the windings (11, 11A, 11B) with the electrically non-conductive material.

10. The stator according to any one of the preceding claims,
wherein in each case at least one temperature monitoring element is arranged in the respective pocket (14) in such a way that this element directly abuts the section of the contact element (20) forming the wall of the pocket (14) opposite the respective winding (11A, 11B).

11. An electric motor with a stator (1) according to any one of the preceding claims.

12. A method of manufacturing a stator (1),
wherein the stator (1) has stator teeth (10) arranged about an axis of rotation (X), each of which is wound with a winding (11, 11A, 11B), and at least one thermally conductive contact element (20),
wherein the at least one contact element (20) extends from a region (12) adjoining the windings (11, 11A, 11B) in the axial direction in each case between two windings (11, 11A, 11B) and is formed to be deformable and/or deflectable in the circumferential direction (U) for direct contact with at least one of the windings (11, 11A, 11B),
**characterized in that** the windings (11, 11A, 11B) are overmolded or remolded with an electrically non-conductive material forming an encapsulation (13), which material forms with the at least one contact element (20) in each case a pocket (14) for receiving a temperature monitoring element which can be inserted in the axial direction, the winding-side wall (15A, 15B) of which is formed at least in a section by the contact element (20) directly abutting the winding (11, 11A, 11B)
and **in that** the at least one contact element (20) is pushed in contact-free manner relative to the windings (11, 11A, 11B) between two windings (11A, 11B) in each case, so that the contact element (20) extends from the region (12) adjoining the windings (11, 11A, 11B) in the axial direction between the windings (11, 11A, 11B) without touching them,
wherein a core (2) is pushed from the axially adjoining region (12) in the axial direction into and/or against the contact element (20), the contact element (20) is deformed and/or deflected by the core (2) in the circumferential direction (U) and is pressed directly against at least one winding (11, 11A, 11B).

13. The method according to the preceding claim,
wherein the windings (11, 11A, 11B), the at least one contact element (20) and the core (2) are overmolded or remolded with the electrically non-conductive material to form the encapsulation (13) and the respective pocket (14) is formed for each contact element (20).

14. The method according to any one of the two preceding claims;
wherein the core (2) is formed as a negative of the pocket (14).

## Revendications

1. Stator (1) pour moteur électrique,
dans lequel le stator (1) comporte des dents de stator (10) disposées autour d'un axe de rotation (X), chacune d'elles étant enroulée avec un enroulement (11, 11A, 11B), et au moins un élément de contact thermoconducteur (20),
dans lequel l'au moins un élément de contact (20) s'étend à partir d'une région (12) adjacente aux enroulements (11, 11A, 11B) dans la direction axiale à chaque fois entre deux enroulements (11, 11A, 11B) et est conçu pour être déformables et/ou déviables dans la direction circonférentielle (U) pour un contact direct avec au moins l'un des enroulements (11, 11A, 11B),
**caractérisé en ce que**
les enroulements (11, 11A, 11B) sont surmoulés ou pressés avec un matériau électriquement non conducteur formant une encapsulation (13) qui, avec l'au moins un élément de contact (20), forme une poche (14) destinée à recevoir un élément de surveillance de température insérable dans la direction axiale, dont la paroi côté enroulement (15A, 15B) est formée au moins dans une section par l'élément de contact (20) qui se trouve directement contre l'enroulement (11, 11A, 11B),
et **en ce que**
l'élément de contact (20) dans un état non déformé dans la direction circonférentielle (U) autour de l'axe de rotation (X) présente une extension plus petite qu'une distance (D) dans la direction circonférentielle des deux enroulements (11A, 11B) l'un de l'autre.

2. Stator selon la revendication 1,
dans lequel l'au moins un élément de contact (20) comporte deux languettes (20A, 20B) s'étendant dans la direction axiale entre les deux enroulements (11, 11A, 11B),
dont une première languette (20A) est conçue pour être déformable et/ou déviable pour un contact direct avec un premier des deux enroulements (11A) dans une première direction circonférentielle et une seconde languette (20B) est conçue pour être déformable et/ou déviable pour un contact direct avec un second des deux enroulements (11B) dans une seconde direction circonférentielle opposée,
et la paroi (15A, 15B) de la poche (14) formée avec l'élément de contact est formée dans une première section par la première languette (20A) directement adjacente au premier enroulement (11A) et dans une seconde section par la seconde languette (20B) directement adjacente au second enroulement (11B).

3. Stator selon la revendication 2,
dans lequel les deux languettes (20A, 20B) entourent la poche (14) dans la direction circonférentielle et sont séparées par une fente (21) s'étendant dans la direction radiale (R).

4. Stator selon la revendication 2 ou 3,
dans lequel le matériau non conducteur d'électricité s'étend entre les deux languettes (20A, 20B).

5. Stator selon la revendication 2 ou 3,
dans lequel le matériau non conducteur d'électricité s'étend entre les deux languettes (20A, 20B) et à travers la fente (21).

6. Stator selon l'une quelconque des revendications 2 à 5,
dans lequel les languettes (20A, 20B) convergent l'une vers l'autre à partir de la zone (12) adjacente aux enroulements (11, 11A, 11B) dans la direction axiale.

7. Stator selon l'une quelconque des revendications précédentes,
comprenant en outre un disque de commutation (16) qui est disposé dans la région (12) adjacente aux enroulements (11, 11A, 11B) dans la direction axiale,
dans lequel l'au moins un élément de contact (20) est fixé au disque de commutation (16) avec son côté respectif s'étendant à partir de la région (12) entre les deux enroulements (11A, 11B).

8. Stator selon la revendication précédente,
dans lequel l'au moins un élément de contact (20) est formé d'un seul tenant avec le disque de commutation (16) avec son côté respectif s'étendant à partir de la région (12) entre les deux enroulements (11A, 11B).

9. Stator selon la revendication précédente,
dans lequel le disque de commutation (16) ainsi que les enroulements (11, 11A, 11B) sont surmoulés ou pressés avec le matériau électriquement non conducteur.

10. Stator selon l'une quelconque des revendications précédentes,
dans lequel dans chaque cas au moins un élément de surveillance de température est disposé dans la poche respective (14) de telle manière qu'il repose directement contre la section de l'élément de contact (20) formant la paroi de la poche (14) opposée à l'enroulement respectif (11A, 11B).

11. Moteur électrique avec un stator (1) selon l'une quelconque des revendications précédentes.

12. Procédé de fabrication d'un stator (1),
dans lequel le stator (1) comporte des dents de stator (10) disposées autour d'un axe de rotation (X), chacune d'elles étant enroulée avec un enroulement (11, 11A, 11B), et au moins un élément de contact thermoconducteur (20),
dans lequel l'au moins un élément de contact (20) s'étend à partir d'une région (12) adjacente aux enroulements (11, 11A, 11B) dans la direction axiale à chaque fois entre deux enroulements (11, 11A, 11B) et est conçus pour être déformables et/ou déviables dans la direction circonférentielle (U) pour un contact direct avec au moins l'un des enroulements (11, 11A, 11B),
**caractérisé en ce que**
les enroulements (11, 11A, 11B) sont surmoulés ou pressés avec un matériau électriquement non conducteur formant une encapsulation (13) qui, avec l'au moins un élément de contact (20), forme une poche (14) destinée à recevoir un élément de surveillance de température insérable dans la direction axiale, dont la paroi côté enroulement (15A, 15B) est formée au moins dans une section par l'élément de contact (20) qui se trouve directement contre l'enroulement (11, 11A, 11B),
et que l'au moins un élément de contact (20) est poussé sans contact vers les enroulements (11, 11A, 11B) entre chaque paire d'enroulements (11A, 11B), de sorte que l'élément de contact (20) s'étend depuis la zone (12) adjacente aux enroulements (11, 11A, 11B) dans la direction axiale entre les enroulements (11, 11A, 11B) sans les toucher,
dans lequel un noyau (2) est poussé depuis la région axialement adjacente (12) dans la direction axiale dans et/ou contre l'élément de contact (20), l'élément de contact (20) est déformé et/ou dévié par le noyau (2) dans la direction circonférentielle (U) et est pressé directement contre au moins un enroulement (11, 11A, 11B).

13. Procédé selon la revendication précédente,
dans lequel les enroulements (11, 11A, 11B), l'au moins un élément de contact (20) et le noyau (2) sont surmoulés ou pressés avec le matériau électriquement non conducteur pour former l'encapsulation (13) et la poche respective (14) est formée pour chaque élément de contact (20).

14. Procédé selon l'une des deux revendications précédentes,
dans lequel le noyau (2) est formé comme un négatif de la poche (14).
